## Europäisches Patentamt
## European Patent Office
## Office européen des brevets

(11) Veröffentlichungsnummer: **0 296 105**
**A1**

(12) # EUROPÄISCHE PATENTANMELDUNG

(21) Anmeldenummer: **88810366.0**

(22) Anmeldetag: **06.06.88**

(51) Int. Cl.⁴: **F 16 L 59/10**
**F 16 L 59/14**

(30) Priorität: **16.06.87 CH 2272/87**

(43) Veröffentlichungstag der Anmeldung:
**21.12.88 Patentblatt 88/51**

(84) Benannte Vertragsstaaten:
**AT BE CH DE ES FR GB IT LI LU NL SE**

(71) Anmelder: **Kabelwerke Brugg A.-G.**
**Klosterzelgstrasse 28**
**CH-5200 Brugg (CH)**

(72) Erfinder: **Vögeli, Marcel**
**Unterstieg 21**
**CH-8222 Beringen (CH)**

**Jostein, Aaserud**
**Schlattstrasse 16**
**CH-5304 Endingen (CH)**

(74) Vertreter: **Breiter, Heinz**
**Patentanwalt H. Breiter AG Wartstrasse 4 Postfach 1163**
**CH-8401 Winterthur (CH)**

(54) **Flexibles Medientransportrohr.**

(57) Ein flexibles Medientransportrohr für einen Temperaturunterschied zur Umgebung aufweisende Flüssigkeiten und/oder Gase besteht aus einem thermoplastischen Kunststoff mit hoher Wärmebeständigkeit und ist mit einer Permeationssperre ausgerüstet.

Die Permeationssperre besteht aus einer ohne Zwischenraum mit dem thermoplastischen Kunststoffrohr (18) verschweissten oder verklebten superplastischen Verbundfolie (10), welche eine Kernschicht (12) aus einer duktilen Metallfolie mit geringen Festigkeitswerten und beidseits vollflächig aufgebrachte Deckschichten (14) aus Kunststoffen aufweist. Die Verbundfolie (10) folgt den Expansions- und Kontraktionsbewegungen des Kunststoffrohrs (18) ohne Ausbildung von Zwischenräumen.

22
24
20
26

16   18   10

Fig. 2

**EP 0 296 105 A1**

Bundesdruckerei Berlin

# Beschreibung

## Flexibles Medientransportrohr

Die Erfindung bezieht sich auf ein flexibles Medientransportrohr für einen Temperaturunterschied zur Umgebung aufweisende Flüssigkeiten und/oder Gase, welches Rohr aus einem thermoplastischen Kunststoff mit hoher Wärmebeständigkeit besteht und mit einer Permeationssperre ausgerüstet ist.

Flexible Medientransportrohre aus Kunststoff haben den Nachteil, dass sie gegenüber Gasen mit kleinen Molekülen permeabel sind. Die treibende Kraft der Permeation ist der Unterschied des Partialdrucks der als Permeanten bezeichneten betreffenden Komponenten zwischen der Innen- und Aussenseite des Rohres. Falls die betreffenden Moleküle genügend klein sind, findet eine temperaturabhängige Permeation statt. Die Auswirkungen der Permeation sind abhängig vom Permeanten, der Menge und dem Ansammlungsort. Neben sich neutral verhaltenden Permeanten, wie beispielsweise Wasserstoff, gibt es auch solche, die eine unerwünschte Auswirkung zeigen:
- In wasserführenden isolierten Leitungen diffundiert Wasserdampf durch das Kunststoffrohr und gelangt in die Isolationsschicht. Feuchte Isolationsmaterialien verlieren drastisch an Isolationswert. Analog können Sauerstoffmoleküle mittels Permeation von aussen nach innen in das durchfliessende Wasser gelangen und dieses an Sauerstoff anreichern. Dies fördert bei Stahlteilen, z.B. einem Radiator im gleichen Rohrsystem, die Korrosion und führt ausserdem zu einer vorzeitigen Alterung des Kunststoffrohrs.
- Bei wasserführenden, nichtisolierten Leitungen spielt die Permeation von Wasser von innen nach aussen keine bedeutende Rolle, hingegen wirkt sich das Eindiffundieren von Sauerstoff, wie vorstehend erwähnt, nachteilig aus.

Diese Nachteile sind mit verschiedenen Ausbildungsformen von flexiblen Medientransportrohren zu beheben versucht worden.

Durch das Aufbringen einer gegenüber dem thermoplasischen Kunststoffrohr weniger durchlässigen Kunststoffbarriere können Permeanten mit grösseren Molekülen zurückgehalten werden. Kunststoffbarrieren sind jedoch gegenüber kleineren Molekülen, wie z.B. Wasser, nahezu unwirksam. Ueberdies ist zu beachten, dass die Durchlässigkeit jedes Kunststoffs für Permeanten mit steigender Temperatur zunimmt.

Die EP-A1 0 084 088 beschreibt ein flexibles Fernwärmeleitungs - Verbundrohr mit einem das Medium leitenden Innenrohr aus zwei konzentrischen Kunststoffschichten, zwischen welchen eine dünne Metallfolie als Diffusions- bzw. Permeationssperre angeordnet ist. Die die Metallfolie einlaminierende äussere Kunststoffschicht ist zusätzlich von einer als Armierung wirkenden Druckbandage umwickelt.

Folgende Probleme bzw. Schwächen wurden bei solchen Konstruktionen festgestellt:
- Bei durch betriebsbedingte Temperatur- und Druckwechsel wiederholten Expansions- und Kontraktionsbewegungen des Rohres tritt/treten Delaminierung und/oder Rissbildung der Metallfolie auf. Eine Delaminierung öffnet Hohlräume für schädigende Einflüsse durch eindiffundierende Permeanten. Dieses Problem entsteht, weil Metallfolien und Kunststoffschichten unterschiedliche Ausdehnungs-Koeffizienten und Elastizitätsmodule besitzen. Nur wenn die Festigkeit der Metallfolie durch geeignete Wahl von Material und Dicke genau auf diejenige der Kunststoffschichten abgestimmt wird, kann die Metallfolie die Ex pansions- und Kontraktionsbewegungen des Kunststoffroh res ohne Delaminierung und/oder Rissbildung mitmachen. Eine Druckbandage, bestehend aus hochfesten Fasern, kann die Delaminierungsgefahr nur reduzieren, nicht aber eliminieren.
- Das mehrschichtig extrudierte Medienrohr ist dicker als die normierten Kunststoffrohre und bedingt dadurch handelsunübliche Verbindungsteile. Die Druckbandage kann diese Umfangsvergrösserung nur vermindern, nicht eliminieren.
- Durch die Dicke verliert das Medienrohr an Flexibilität und hat ein höheres Gewicht, wodurch die Handlichkeit wesentlich beeinträchtigt ist.
-Die vielen Arbeitsgänge, eingeschlossen eine zweifache Extrusion, ergeben ein teures Medienrohr.

In der DE-A1 33 07 120, welche ebenfalls ein Wärmeleitungsrohr betrifft, wird vorgeschlagen, ein Innenrohr aus einem vernetzten Kunststoff bzw. mit an seiner Innen- und/oder Aussenseite bzw. innerhalb seiner Umwandung aufgebrachter metallischer Lage zu verwenden. Hier wird die Metallfolie sogar der vollen Expansionskraft des Rohres ausgesetzt, weil keine Druckbandage vorhanden ist.

Die Erfinder haben sich die Aufgabe gestellt, ein flexibles Medientransportrohr für Flüssigkeiten und/ oder Gase der eingangs genannten Art zu schaffen, welches eine temperaturunabhängige, nicht delaminierende Permeationssperre aufweist, aber dennoch in weniger Arbeitsgängen einfach und mit handelsüblichen Materialien kostengünstig herstellbar ist. Das Rohr soll weder nennenswert dicker werden, noch eine geringere Flexibilität aufweisen.

Die Aufgabe wird erfindungsgemäss dadurch gelöst, dass die Permeationssperre aus einer ohne Zwischenraum mit dem ther moplastischen Kunststoffrohr verschweissten oder verklebten superplastischen Verbundfolie besteht, welche eine Kernschicht aus einer duktilen Metallfolie mit geringen Festigkeitswerten und beidseits vollflächig aufgebrachte Deckschichten aus Kunststoffen aufweist, wobei die Verbundfolie den Expansions- und Kontraktionsbewegungen des Kunststoffrohrs ohne Ausbildung von Zwischenräumen folgt.

Eine Metall - Kunststoff - Verbundfolie wird als superplastisch bezeichnet, wenn die Metallfolie ihre metallsischen Dehnungseigenschaften verliert und die gesamte Verbundfolie das Dehnungsverhalten der Kunststoffdeckschichten annimmt. So kann beispielsweise eine Metallfolie mit 20 - 30% Dehnungsvermögen als Kernschicht in einer Verbundfolie mit beidseits angebrachten Kunststoffdeckschichten eine Dehnung von über 100 % erreichen.

Das Verhältnis der Dicke der metallischen Kernschicht zu derjenigen einer Deckschicht aus Kunststoff/en liegt in der Praxis zweckmässig zwischen 1:1 und 1:3. Die als Permeationssperre eingesetzten Verbundfolien haben eine metallische Kernschicht mit einer Dicke von vorzugsweise 20 - 100 μm. Die Dicke einer Deckschicht aus Kunststoff beträgt vorzugsweise 30 - 300 μm.

Die vom thermoplastischen Kunststoffrohr abgewandte Deckschicht der Verbundfolie kann aus mehreren, separat aufgebrachten Kunststoffen bestehen.

Für die metallische Kernschicht eignet sich das sehr niedrige Festigkeitswerte aufweisende Blei oder eine entsprechende Bleilegierung besonders gut. Blei - Kunststofflaminate sind im Handel erhältlich, sie werden von der japanischen Firma Furukawa Electrical Company Ltd. vertrieben.

Das mediumführende thermoplastische Kunststoffrohr besteht, damit es auch bei hohen Temperaturen eine genügende Druckfestigkeit aufweist, vorzugsweise aus einem vernetzten oder vernetzbaren Material. Insbesondere bieten sich hier Polyäthylen hoher Dichte, aber auch Polypropen, Polybuten, Perfluoräthylenpropen, Polyvinylidenfluorid nachchloriertes Polyvinylchlorid oder Polysulfon an.

Die oben im Detail erörterte, als Permeationssperre dienende Verbundfolie wird in an sich bekannter Weise längslaufend oder spiralförmig, satt aufliegend, aufgebracht, wobei die Bandkanten überlappen. Sowohl aus fabrikationstechnischen als auch produktespezifischen Gründen werden die Verbundfolien bevorzugt auf der Aussenseite des mediumführenden Kunststoffrohrs aufgebracht. Mit ebenfalls bekannten Techniken werden die Verbundfolien miteinander und mit dem thermoplastischen Kunststoffrohr verklebt oder verschweisst. Dazu können, wie auch zum Vernetzen des thermoplastischen Kunststoffrohrs, die Wärme des zu Beginn transportierten Mediums oder spezielle Wärmequellen benutzt werden.

Bei der Verwendung des flexiblen Medientransportrohrs als Innenrohr von Fernwärmeleitungs-Verbundrohren wird in an sich bekannter Weise eine Wärmeisolierung aus einem geschäumten Kunststoff aufgebracht und mit einem schützenden Aussenmantel versehen.

Das erfindungsgemässe flexible Medientransportrohr hat, nicht abschliessend aufgezählt, folgende Verwendungsmöglichkeiten:

1. Transport von flüssigen Medien in isolierten Rohren, mit einem Temperaturunterschied zwischen dem Medium und der Umgebungstemperatur, wobei ein möglichst kleiner Wärmeaustausch stattfindet, z.B. Fernwärmeleitungen, Trinkwasserleitungen, Brauchwasserleitungen und Kühlleitungen.

2. Transport von flüssigen Medien in nicht isolierten Rohren mit einem Temperaturunterschied vom Medium zur Umgebung, wobei ein möglichst grosser Wärmeaustausch mit der Umgebung stattfindet, z.B. Fussbodenheizungsrohre und Erdwärmeleitungen. Eine auf der Aussenseite eines medienführenden, thermoplastischen Kunststoffrohrs aufgebrachte superplastische Verbundfolie kann mit einem wenig isolierenden Aussenmantel abgedeckt sein.

Das erfindungsgemässe flexible Medientransportrohr für Flüssigkeiten und/oder Gase weist gegenüber bekannten Ausbildungsformen bedeutende Vorteile auf:

- Die auf das thermoplastische Kunststoffrohr aufgebrachte superplastische Verbundfolie mit einem duktilen Metallkern geringer Festigkeit erlaubt nicht nur eine vollständig undurchlässige, temperaturunabhängige Permeationssperre, sondern vermindert die bisher stets inhärente Gefahr des Delaminierens auf ein vernachlässigbares Minimum. Das superplastische Verhalten des Folienverbunds erlaubt, dass dieser den Expansions- und Kontraktionsbewegungen des thermoplastischen Kunststoffrohrs stets folgen kann, ohne dass der geringste Zwischenraum gebildet wird. Deshalb können sich keine diffundierten, sich schädlich auswirkenden Medien sammeln.

- Es muss keine Metallfolie in das thermoplastische Kunststoffrohr einlaminiert werden, womit für das Kunststoffrohr ein Aufextrudieren einer zweiten Kunststoffschicht entfällt.

- Als Permeationssperre kann eine dünne Verbundfolie aufgebracht werden, welche die Flexibilität des Rohres und dessen Handlichkeit nur unbedeutend vermindert und auf das Rohrgewicht pro Laufmeter praktisch keinen Einfluss hat.

- Neben den vereinfachten Produktionsverfahren hilft die Verwendung von als Normbändern ausgebildeten Verbundfolien, insbesondere Blei - Kunststofflaminaten, die Kosten tief zu halten.

- Die geringe Dicke der Rohre erlaubt die Verwendung von handelsüblichen Kunststoffrohrverbindungen.

Das erfindungsgemässe flexible Medientransportrohr für Flüssigkeiten und/oder Gase wird beispielsweise in einem Durchlaufverfahren hergestellt. Die zu beschichtende Oberfläche des thermoplastischen Kunststoffrohrs wird vorerst aufgerauht, beispielsweise mit Bürsten oder mit Schleifpapier. Dann wird die superplastische Verbundfolie spiralförmig aufgewickelt oder in Längsrichtung umgelegt, wobei die Bandkanten überlappen. Das mit der Permeationssperre versehene Kunststoffrohr wird in einem Durchlaufofen vorgeheizt. In einer unmittelbar anschliessenden Einheit wird die Verbundfolie versiegelt, was z.B. in einem Ringbrenner, einem zweiten Durchlaufofen oder mit einer geheizten Nippeldurchführung erfolgen kann.

Die Erfindung wird anhand der in der Zeichnung dargestellten Ausführungsbeispiele näher erläutert. Es zeigen schematisch:

- Fig. 1 einen Teilschnitt durch eine als Permeationssperre eingesetzte Verbundfolie, und

- Fig. 2 eine aufgeschnittene perspektivische Ansicht eines isolierten flexiblen Medientransportrohrs.

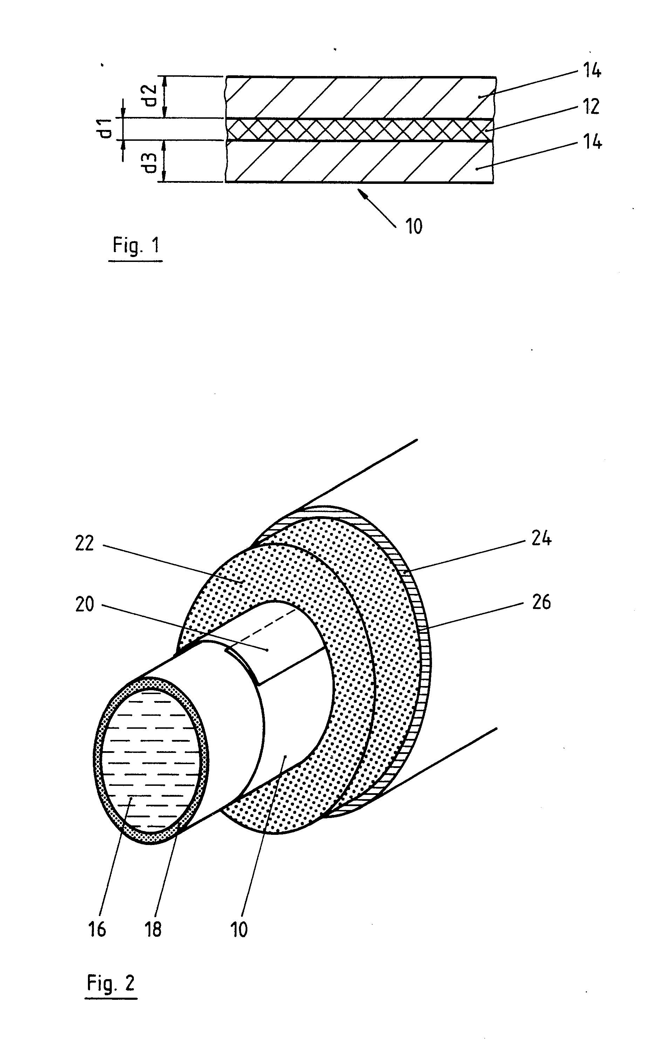

Die in Fig. 1 dargestellte Verbundfolie 10 ist ein 0,25 mm dickes Bleilaminat-Band. Die metallische Kernschicht 12 hat eine Dicke $d_1$ von 50 µm und ist beidseits vollflächig mit zwei Deckschichten 14 einer Dicke $d_2$ und $d_3$ von je 100 µm vollflächig verbunden. In nicht dargestellten Beispielen ist die Dicke $d_3$ grösser als $d_2$ und/oder besteht aus verschiedenen Kunststofflagen.

In Fig. 2 wird ein mit 95°C heissem Wasser 16 gefülltes, thermoplastisches Kunststoffrohr 18 gezeigt, welches aus vernetztem Polyäthylen besteht. Auf die Aussenseite dieses Kunststoffrohrs ist längslaufend eine Verbundfolie 10 gemäss Fig. 1 aufgezogen und mit dem Kunststoffrohr 18 versiegelt, wobei deren Bandkanten 20 einen Ueberlappungsbereich bilden, in welchem die Verbundfolie 10 hermetisch dicht versiegelt oder verklebt wird. Das thermoplastische Kunststoffrohr 18 mit der Verbundfolie 10 aus einem Bleilaminat-Band bilden das erfindungsgemässe flexible Medientransportrohr.

Nach einer nicht dargestellten Variante wird die spiralförmig oder längslaufend auf das Kunststoffrohr 18 aufgebrachte Verbundfolie 10 mit einer weiteren, als Druckbandage wirkenden Schicht umwickelt. Diese aus einem spiralförmig aufgebrachten Band gebildete Schicht überlappt mit den Längskanten. Die Druckbandage besteht zweckmässig aus gewobenen Kunststoffasern, z.B. aus einem Polyester. Beim Siegeln der Verbundfolie 10 verschweisst diese nicht mit der direkt aufliegenden Druckbandage.

Dieses Medientransportrohr wird gemäss Fig. 2 als Fernwärmeleitungsrohr eingesetzt. Die Permeationssperre aus der Verbundfolie 10 ist deshalb von einer koaxial ausgebildeten thermischen Isolation 22 umgeben. Diese besteht im vorliegenden Fall aus einem geschlossenporigen Polyurethanschaum, sie kann jedoch auch aus einem Polyäthylenschaum, einem vernetzten Polyäthylenschaum, Polyisocyanuratschaum, Mineralwolle oder Glaswolle bestehen.

Ein Aussenmantel 24 aus Kunststoff mit einer innenliegenden Aluminiumfolie 26 oder einem innenliegenden, gewellten Metallrohr schützt das Fernwärmeleitungsrohr. Der Aussenman tel besteht aus Polyäthylen geringer Dichte oder Polyvinylchlorid.

**Patentansprüche**

1. Flexibles Medientransportrohr für einen Temperaturunterschied zur Umgebung aufweisende Flüssigkeiten und/oder Gase, welches Rohr aus einem thermoplastischen Kunststoff mit hoher Wärmebeständigkeit besteht und mit einer Permeationssperre ausgerüstet ist, dadurch gekennzeichnet, dass die Permeationssperre aus einer ohne Zwischenraum mit dem thermoplastischen Kunststoffrohr (18) verschweissten oder verklebten superplastischen Verbundfolie (10) besteht, welche eine Kernschicht (12) aus einer duktilen Metallfolie mit geringen Festigkeitswerten und beidseits vollflächig aufgebrachte Deckschichten (14) aus Kunststoffen aufweist, wobei die Verbundfolie (10) den Expansions- und Kontraktionsbewegungen des Kunststoffrohrs (18) ohne Ausbildung von Zwischenräumen folgt.

2. Medientransportrohr nach Anspruch 1, dadurch gekennzeichnet, dass das thermoplastische Kunststoffrohr (18) aus vernetztem oder vernetzbarem Material besteht.

3. Medientransportrohr nach Anspruch 1 oder 2, dadurch gekennzeichnet, dass das thermoplastische Kunststoffrohr (18) aus Polyäthylen, Polypropen, Polybuten, Perfluoräthylenpropen, Polyvinylidenfluorid, nachchloriertem Polyvinylchlorid oder Polysulfon besteht.

4. Medientransportrohr nach einem der Ansprüche 1 - 3, dadurch gekennzeichnet, dass die Verbundfolie (10) längslaufend oder spiralförmig, mit überlappenden Bandkanten (20), auf der Aussenseite des thermoplastischen Kunststoffrohrs (18) verläuft.

5. Medientransportrohr nach einem der Ansprüche 1 - 4, dadurch gekennzeichnet, dass das die Kernschicht (12) der Verbundfolie (10) aus Blei oder einer Bleilegierung besteht.

6. Medientransportrohr nach einem der Ansprüche 1 - 5, dadurch gekennzeichnet, dass die vom thermoplastischen Kunststoffrohr (18) abgewandte Deckschicht (14) der Verbundfolie (10) aus mehreren, separat aufgebrachten Kunststoffen besteht.

7. Medientransportrohr nach einem der Ansprüche 1 - 6, dadurch gekennzeichnet, dass direkt auf der Verbundfolie eine weitere, als Druckbandage wirkende Schicht spiralförmig aufgebracht ist, welche vorzugsweise aus gewobenen Kunststoffasern besteht.

8. Medientransportrohr nach einem der Ansprüche 1 - 7, dadurch gekennzeichnet, dass das thermoplastische Kunststoffrohr (18) mit der Verbundfolie (10) koaxial in eine thermische Isolationsschicht (22) eingebettet und von einem Aussenmantel (24), vorzugsweise aus Kunststoff, geschützt ist.

9. Medientransportrohr nach Anspruch 8, dadurch gekennzeichnet, dass ein Aussenmantel (24) aus Kunststoff eine innenliegende Aluminiumfolie (26) oder ein innenliegendes, gewelltes Metallrohr aufweist.

10. Medientransportrohr nach einem der Ansprüche 1 - 7, dadurch gekennzeichnet, dass das thermoplastische Kunststoffrohr (18) mit der Verbundfolie (10) koaxial in einen wenig isolierenden Aussenmantel (24), vorzugsweise aus Kunststoff, eingebettet ist.

Fig. 1

14
12
14

d2
d1
d3

10

Fig. 2

22
24
20
26

16   18   10

# EUROPÄISCHER RECHERCHENBERICHT

**Europäisches Patentamt**

Nummer der Anmeldung

EP 88 81 0366

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 213 487 (S.A. FUNK et al.) * Figur 2; Spalte 1, Zeilen 28-62 * | 1,4,5, 10 | F 16 L 59/10 F 16 L 59/14 |
| D,A | EP-A-0 084 088 (FELTEN & GUILLEAUME ENERGIETECHNIK GMBH) * Ansprüche * | 1-3,5,7 ,8,10 | |
| A | FR-A-2 319 075 (COMMISSARIAT A L'ENERGIE ATOMIQUE) * Anspruch 1; Figuren * | 1 | |
| A | DE-A-3 104 161 (SIEMENS AG) * Ansprüche 1,2,8,12,13; Figur 6 * | 1,5 | |
| A | SOVIET INVENTIONS ILLUSTRATED, Sektion Mechanik, Woche K 39, 9. November 1983, Abstraktnr. A82Q67 M/13, Derwent Publications Ltd., London, GB; & SU - A - 974 027 (URALS PIPELINE) 15.11.1982 | 1 | |

**RECHERCHIERTE SACHGEBIETE (Int. Cl.4)**

F 16 L 59/00

Der vorliegende Recherchenbericht wurde für alle Patentansprüche erstellt

| Recherchenort | Abschlußdatum der Recherche | Prüfer |
|---|---|---|
| BERLIN | 06-09-1988 | SCHAEFFLER C.A.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)